# EUROPÄISCHE PATENTSCHRIFT

(11) **EP 2 272 627 B1**
(45) Veröffentlichungstag und Bekanntmachung des Hinweises auf die Patenterteilung: **31.08.2011**
(21) Anmeldenummer: 10166891.1
(22) Anmeldetag: 22.06.2010
(51) Int. Cl.: B23Q 17/00

(54) **Arbeitsspindel mit einer Vorrichtung zur Überwachung der Lage eines Werkzeugs oder Werkzeugträgers an der Arbeitsspindel**
Work spindle with a device for monitoring the location of a tool or tool holder on the work spindle
Broche de travail avec un dispositif de surveillance de la position d'un objet ou d'un porte-objet sur la broche de travail

(30) Priorität: 01.07.2009 DE 102009031404
(43) Veröffentlichungstag der Anmeldung: 12.01.2011
(73) Patentinhaber: Ott-Jakob Spanntechnik GmbH, 87663 Lengenwang (DE)
(72) Erfinder: Gast, Stephan, 86987, Schwabsoien (DE); Hörger, Winfried, 87675, Stötten am Auerberg (DE); Greif, Josef, 87654, Friesenried (DE); Bechteler, Wolfgang, 87640, Ebenhofen (DE); Bonerz, Stefan, 87616, Marktoberdorf (DE)
(74) Vertreter: Charrier, Rapp & Liebau

(56) Entgegenhaltungen:
- WO-A1-2005/009677
- DE-A1- 19 959 778
- US-A1- 2006 147 287

## Beschreibung

Die Erfindung betrifft eine Arbeitsspindel mit einer Vorrichtung zur Überwachung der Lage eines Werkzeugs oder Werkzeugträgers an der Arbeitsspindel nach dem Oberbegriff des Anspruchs 1.

Bei Werkzeugmaschinen kann durch Verschmutzungen an den Werkzeugauflageflächen eine suboptimale Werkzeugspannung hervorgerufen werden. Verschmutzungen können insbesondere aus Materialspänen bestehen, die bei der Bearbeitung eines Werkstücks zwangsläufig anfallen. Folglich kann es aufgrund einer Schiefstellung bzw. eines Achsversatzes des Werkzeugs zu einer mangelhaften Bearbeitung kommen. Dieser Effekt wird noch verstärkt durch den Einsatz von langen Werkzeugen. Zur Verbesserung der Fertigungsqualität und Reduktion des Ausschussanteils ist es wünschenswert, das Auftreten einer fehlerhaften Werkzeugspannung bereits vor Beginn der Bearbeitung erkennen zu können. Daher wurde bereits vorgeschlagen, bei Werkzeugmaschinen die Qualität der Werkzeugspannung durch eine Überwachung der Plananlage des Werkzeugs zu überprüfen.

Ein bekanntes Konzept ist die Überwachung der Werkzeugplananlage mittels Druckluft. Hierfür wird ein Druckluftsystem verwendet, welches bei einem Werkzeugwechsel aktiviert wird. Eine optimale Werkzeugspannung führt zu einem Druckaufbau im Hohlraumbereich des Werkzeugspanners, während eine fehlerhafte Werkzeugspannung keinen oder nur einen geringen Druckaufbau zulässt. Die Korrektheit der Werkzeugspannung kann anhand einer Druckmessung detektiert werden. Voraussetzung ist jedoch ein System von Luftkanälen in der Arbeitsspindel bzw. dem Werkzeugspanner sowie eine entsprechende Druckluftversorgung.

Die DE 103 51 347 A1 beschreibt die Überwachung der an der Spannvorrichtung einer Werkzeugmaschine auftretenden Kräfte mittels druck-, spannungs- oder kraftsensibler Sensorik. Das hier verfolgte Ziel liegt in der gleichzeitigen Überwachung der korrekten Werkzeugspannung und der während der Bearbeitung auftretenden Kräfte, um Prozessparameter bei der Bearbeitung optimieren zu können. Hierzu müssen die Sensoren so in die Spannvorrichtung integriert sein, dass sie in den dort während der Bearbeitung auftretenden Kraftfluss einbezogen sind.

Die DE 199 59 778 A1 lehrt die Verwendung eines Telemetriesystems mit abstandsmessender Sensorik zur gleichzeitigen Kontrolle des Spannzustandes und der Plananlage der Werkzeugaufnahme an der Spindel. Über die Ausgestaltung der Sensorik und der Telemetrieeinheit enthält die Schrift jedoch keine näheren Angaben.

Die Aufgabe der Erfindung ist es, zur Überwachung der Plananlage eines Werkzeugs oder Werkzeugträgers an einer Arbeitsspindel eine neue und zweckmäßige Lösung zu schaffen, die einfach und kostengünstig realisierbar ist.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Die Erfindung sieht vor, zwischen einem feststehenden Teil (Stator) und einem rotierenden Teil (Rotor) durch elektrische Kopplung zweier Hochfrequenzleitungen eine drahtlose Verbindung bereitzustellen, in die statorseitige Hochfrequenzleitung mit einer Signalquelle ein hochfrequentes Messsignal einzuspeisen, und das Reflexionsverhalten der rotorseitigen Hochfrequenzleitung durch eine Vielzahl von Sensorelementen in Abhängigkeit von der Position des Werkzeugs oder Werkzeugträgers in Bezug auf die Arbeitsspindel zu beeinflussen, so dass besagte Position statorseitig mittels einer Reflexionsmesseinrichtung festgestellt werden kann. Dabei geht es nicht um die vollständige Bestimmung der Werkzeugposition, sondern nur um die Entscheidung der Frage, ob das Werkzeug oder der Werkzeugträger plan an einer Werkzeugauflagefläche der Arbeitsspindel anliegt oder nicht.

Vorteilhafterweise sind die statorseitige und die rotorseitige Hochfrequenzleitung jeweils als Mikrostreifenleitung ausgebildet und solchermaßen benachbart zueinander angeordnet, dass zwischen ihnen eine elektrische Kopplung mit bevorzugter Ausbreitungsrichtung des übergekoppelten Signals besteht, d.h. die Funktion eines Richtkopplers bereitgestellt wird.

Rotorseitig können mehrere separate Hochfrequenzleitungen, die jeweils verschiedenen Winkelsegmenten des Rotors zugeordnet sind, oder eine einzige Hochfrequenzleitung vorgesehen sein. Es versteht sich, dass mehrere separate Hochfrequenzleitungen zwangsläufig einen Multiplexbetrieb der Reflexionsmessung zur Folge haben.

In einer ersten Ausführungsform der Erfindung sind die Sensorelemente dielektrische Resonatoren, die sich bei planer Anlage des Werkzeugs oder Werkzeugträgers in Resonanz befinden und beim Abheben des Werkzeugs oder Werkzeugträgers außer Resonanz geraten, was sich in einer deutlichen Änderung der Eingangsimpedanz und damit auch des Reflexionsverhaltens der rotorseitigen Hochfrequenzleitung oder - leitungen äußert, welche an der statorseitigen Hochfrequenzleitung durch eine Reflexionsmessung festgestellt werden kann.

In einer zweiten Ausführungsform der Erfindung sind die Sensorelemente Stichleitungen, die an der Werkzeugauflagefläche offen enden, so dass sie durch die Anlage des Werkzeugs kurzgeschlossen werden. Dies hat eine massive Änderung der Eingangsimpedanz dieser Stichleitungen zur Folge, die sich im Reflexionsverhalten der rotorseitigen Hochfrequenzleitungen niederschlägt, welches wiederum statorseitig durch eine Reflexionsmessung festgestellt werden kann. In diesem Fall sind bevorzugt mehrere separate Hochfrequenzleitungen vorgesehen, denen jeweils eine eigene Stichleitung zugeordnet ist.

Die Verwendung elektrisch gekoppelter Hochfrequenzleitungen mit von der Werkzeugplananlage abhängigem Reflexionsverhalten bietet wesentliche Vorteile. Die Werkzeugplananlage kann im Betrieb der Arbeitsspindel fortlaufend überwacht werden. Am rotierenden Teil braucht keine aktive Elektronik angebracht werden, sondern lediglich passive Komponenten einfachster Art, die keine eigene Stromversorgung benötigen. Eine aufwändige und störanfällige Datenkommunikation zwischen dem feststehenden und dem rotierenden Teil findet nicht statt, sondern die Positionsüberwachung des Werkzeugs ist auf eine einfache Reflexionsmessung an einer Hochfrequenzleitung zurückgeführt.

Nachfolgend werden Ausführungsbeispiele der Erfindung unter Bezugnahme auf die Zeichnungen beschrieben. In diesen zeigt
- Fig. 1: eine Vorderansicht einer Arbeitsspindel mit Werkzeugauflageflächen,
- Fig. 2: eine schematische Teillängsschnittansicht einer fehlerhaften Werkzeugspannung,
- Fig. 3: eine schematische Teilschnittansicht einer erfindungsgemäßen Leitungsanordnung in Axialrichtung der Arbeitsspindel gesehen,
- Fig. 4: eine schematische Schnittansicht der Leitungsanordnung von Fig. 3 in Umfangsrichtung der Arbeitsspindel gesehen,
- Fig. 5: den Endabschnitt des statorseitigen Teils der Leitungsanordnung von Fig. 3 und 4 in Radialrichtung R der Arbeitsspindel gesehen,
- Fig. 6: das Funktionsprinzip eines Rückwärtskopplers in Form eines Ersatzschaltbildes,
- Fig. 7: die Grundkonfiguration zum Betrieb eines dielektrischen Resonators,
- Fig. 8: ein Ersatzschaltbild eines dielektrischen Resonators,
- Fig. 9: das Blockschaltbild einer ersten Ausführungsform einer erfindungsgemäßen Überwachungsvorrichtung,
- Fig. 10: das Blockschaltbild einer Abwandlung der ersten Ausführungsform einer erfindungsgemäßen Überwachungsvorrichtung und
- Fig. 11: das Blockschaltbild einer zweiten Ausführungsform einer erfindungsgemäßen Überwachungsvorrichtung.

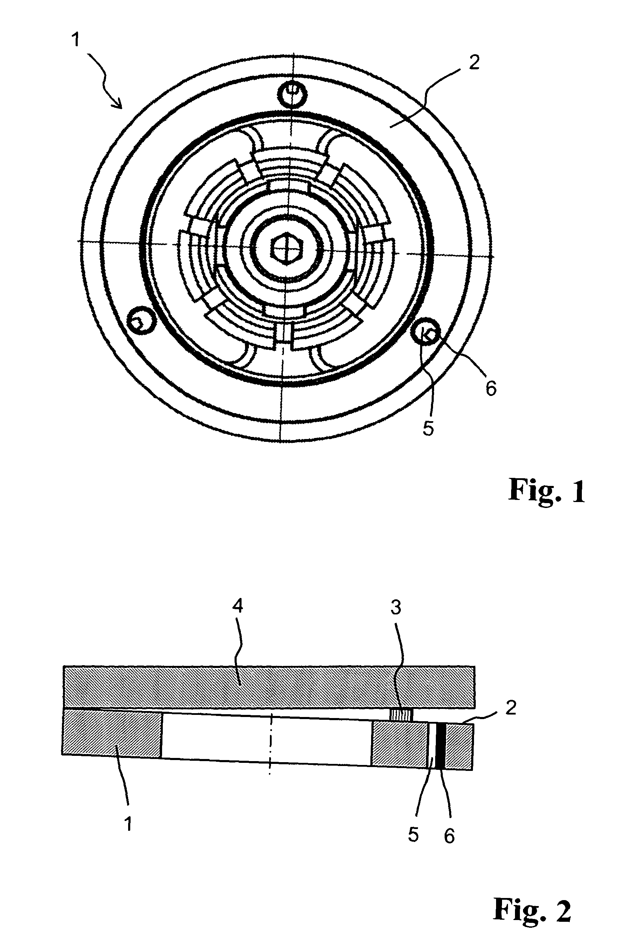

Fig. 1 zeigt die Vorderansicht einer Arbeitsspindel 1, die Bestandteil einer nicht dargestellten Bearbeitungsmaschine, insbesondere einer Werkzeugmaschine ist. Die Arbeitsspindel 1 weist an ihrer Stirnseite eine Auflagefläche 2 auf, an der ein Werkzeug oder ein Werkzeugträger im gespannten Zustand plan aufliegen soll. Es können auch mehrere separate Auflageflächen vorgesehen sein, die genau planparallel zueinander in einer einzigen Ebene liegen. Zur Verwendung an der Arbeitsspindel 1 bestimmte Werkzeuge oder Werkzeugträger, wobei letztere ihrerseits verschiedene Werkzeuge aufnehmen können, weisen an ihrer Rückseite ebenfalls eine entsprechende stirnseitige Auflagefläche auf. Bei einer planen Anlage der werkzeugseitigen bzw. werkzeugträgerseitigen Auflagefläche an der spindelseitigen Auflagefläche 2 verläuft die Längsachse des Werkzeugs bzw. Werkzeugträgers genau parallel zur Längsachse der Arbeitsspindel 1. Die Zentrierung des Werkzeugs bzw. Werkzeugträgers bezüglich der Arbeitsspindel 1 erfolgt durch kegelförmige Auflageflächen im Inneren der Arbeitsspindel 1.

Im Fall einer Verschmutzung der Auflagefläche 2 ist keine plane Anlage des Werkzeugs oder Werkzeugträgers an der Arbeitsspindel 1 mehr möglich. Insbesondere kann eine solche Verschmutzung durch bei der Bearbeitung eines Werkstücks anfallende Späne erfolgen. Schematisch ist eine solche Situation in Fig. 2 dargestellt. Auf dem rechten Teil der Auflagefläche 2 liegt ein Span 3, der beim Spannen des Werkzeugs 4 an der Arbeitsspindel 1 zwischen dieser und dem Werkzeug 4 eingeklemmt wird und dafür sorgt, dass ein keilförmiger Spalt zwischen beiden besteht. Bei der Bearbeitung eines Werkstücks mit einem solchermaßen schrägstehenden Werkzeug 4 ist kein maßhaltiges Ergebnis, sondern Ausschuss zu erwarten. In der Arbeitsspindel 1 sind mehrere Bohrungen 5 vorgesehen, die sich von der Auflagefläche 2 aus in Axialrichtung der Arbeitsspindel 1 erstrecken, und in denen jeweils ein Sensorelement 6 angeordnet ist. Auf die Sensorelemente 6, mit deren Hilfe die Position des Werkzeugs 4 bezüglich der Auflagefläche 2 elektronisch erfasst und die Erkennung einer Schrägstellung ermöglicht werden soll, wird später näher eingegangen.

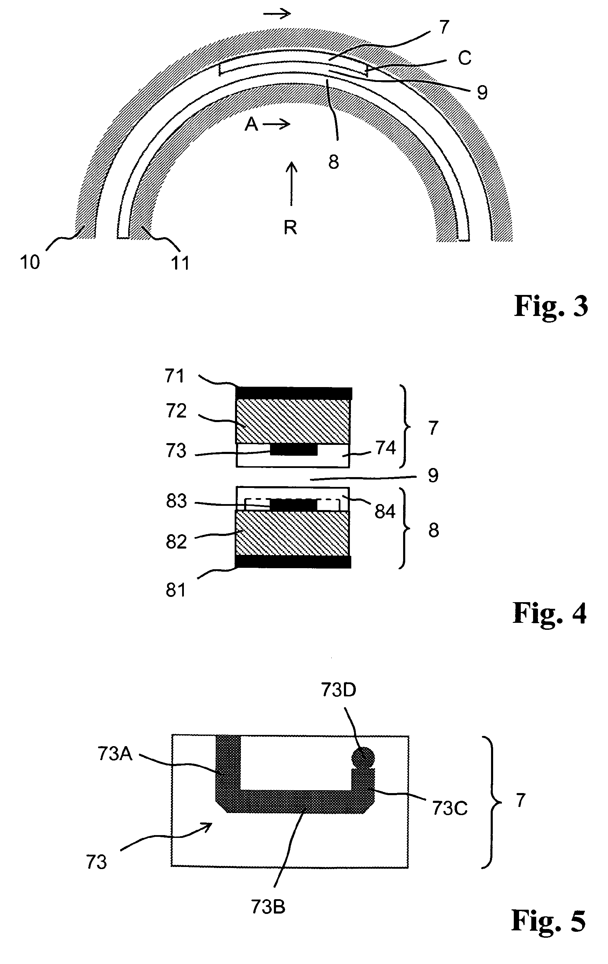

Zunächst wird nachfolgend die erfindungsgemäße Verbindung zwischen den mit der Arbeitsspindel 1 rotierenden Sensorelementen 6 und einer stationär an der Bearbeitungsmaschine angeordneten Messelektronik beschrieben. Hierzu zeigt Fig. 3 eine schematische Teilschnittansicht einer erfindungsgemäßen Leitungsanordnung, die aus zwei Mikrostreifenleitungen 7 und 8 besteht, welche durch einen Luftspalt 9 voneinander getrennt sind. Die Mikrostreifenleitung 7 ist auf einer Innenumfangsfläche eines feststehenden Teils der Bearbeitungsmaschine, nachfolgend Stator 10 genannt, angeordnet, die andere Mikrostreifenleitung 8 auf einer Außenumfangsfläche eines mit der Arbeitsspindel 1 rotierenden Teils, nachfolgend Rotor 11 genannt, bei dem es sich auch unmittelbar um die Arbeitsspindel 1 handeln kann. Die Ansichtsrichtung von Fig. 3 ist die Axialrichtung der Arbeitsspindel 1.

Eine Schnittansicht der Leitungsanordnung von Fig. 3 in Umfangsrichtung auf Höhe der dortigen Linie A-A zeigt Fig. 4. Wie daraus zu ersehen ist, besteht die statorseitige Mikrostreifenleitung 7 aus einer Massefläche 71, einem Dielektrikum 72, einem Streifenleiter 73 und einer Abdeckschicht 74, bei der es sich ebenfalls um ein Dielektrikum handelt. Ebenso besteht die rotorseitige Mikrostreifenleitung 8 aus einer Massefläche 81, einem Dielektrikum 82, einem Streifenleiter 83 und einer Abdeckschicht 84. Der grundsätzliche Aufbau einer Mikrostreifenleitung 7 bzw. 8 ist in Fachkreisen bekannt. Die Mikrostreifenleitungen 7 und 8 sind fertige Einheiten aus flexiblem Material, die durch Klebung leicht auf dem Stator 10 bzw. dem Rotor 11 befestigt werden können und sich dabei der jeweiligen Oberflächenkrümmung anpassen. Die Abdeckschichten 74 und 84 bieten Schutz vor den in einer Werkzeugmaschine verwendeten Betriebsmitteln, wie öligen Flüssigkeiten und dergleichen.

Die beiden Mikrostreifenleitungen 7 und 8 sind an dem Stator 10 bzw. an dem Rotor 11 so angeordnet, dass die beiden Streifenleiter 73 und 83 einander zugewandt sind. Zwischen den beiden Mikrostreifenleitungen 7 und 8 besteht eine elektrische Kopplung, die eine drahtlose Signalübertragung über den Luftspalt 9 hinweg ermöglicht. Zum Ausgleich eines axialen Versatzes kann einer der beiden Mikrostreifenleiter 73 oder 83 breiter ausgeführt sein, so dass er den jeweils anderen in axialer Richtung überlappt, wie es in Fig. 4 beispielhaft an dem rotorseitigen Mikrostreifenleiter 83 durch gestrichelte Linien angedeutet ist. Wenn sich zumindest eine der beiden Mikrostreifenleitungen 7 oder 8 nahezu über den vollen Umfang des Stators 10 bzw. des Rotors 11 erstreckt, dann ist die Übertragungscharakteristik der elektrischen Kopplung von der Winkelposition des Rotors 11 gegenüber dem Stator 10 unabhängig. In Fig. 3 ist der Fall gezeigt, dass die Mikrostreifenleitung 8 nahezu den vollen Umfang des Rotors 11 abdeckt, während die Mikrostreifenleitung 7 nur ein begrenztes Umfangssegment des Stators 10 abdeckt.

Das zwischen den Streifenleitern 73 und 83 insgesamt wirksame Dielektrikum setzt sich aus den beiden Abdeckschichten 74 und 84 sowie dem Luftspalt 9 zusammen. Der Luftspalt 9 zwischen den Abdeckschichten 74 und 84 der beiden Mikrostreifenleitungen 7 bzw. 8 sollte möglichst schmal sein, um einen quasi homogen mit einem Dielektrikum gefüllten Raum herzustellen. Innerhalb dieses Raumes wandeln sich die beiden Mikrostreifenleitungen 7 und 8 zu Streifenleitungen, die sich gegenüber Mikrostreifenleitungen in ihrer Impedanz und Phasengeschwindigkeit abweichend verhalten. Durch Einrichten des gegenseitigen Abstandes der Streifenleiter 73 und 83 und der Länge des am Stator 10 befindlichen Streifenleiters 73 kann der Leitungsanordnung die Charakteristik eines Richtkopplers verleihen werden.

Eine Draufsicht auf einen Teil der statorseitigen Mikrostreifenleitung 7 in Radialrichtung, d.h. entsprechend dem Pfeil R in Fig.3, ist in Fig. 5 zu sehen. Der Streifenleiter 73 weist einen in Umfangsrichtung der Innenoberfläche des Stators 10 verlaufenden Abschnitt 73B und zwei in Axialrichtung verlaufende Abschnitte 73A und 73C auf. Eine in Fig. 5 nicht gezeigte Fortführung des axialen Abschnitts 73A führt zu einer auf dem Stator 10 angeordneten Messelektronik, welche ein Messsignal in die Mikrostreifenleitung 7 einspeist und dessen Reflexion auswertet, während der andere axiale Abschnitt 73C an einem Abschlusswiderstand 73D endet. Der in Umfangsrichtung verlaufende Abschnitt 73B ist in Axialrichtung so positioniert, dass er entsprechend Fig. 4 dem Streifenleiter 83 der rotorseitigen Mikrostreifenleitung 8 gegenüberliegt. Die Länge des Abschnitts 73B beträgt im Idealfall ein Viertel der bei der Betriebsfrequenz der Leitungsanordnung auf dem Abschnitt 73B auftretenden Wellenlänge, kann aber in anderen Ausführungsformen hiervon abweichen.

Ein von der Messelektronik in den Streifenleiter 73 über dessen axialen Abschnitt 73A eingespeistes Messsignal wird in dem Abschnitt 73B entsprechend dem sich durch die Entfernung dieses Abschnitts 73B von dem gegenüberliegenden Streifenleiter 83 der rotorseitigen Mikrostreifenleitung 8 ergebenden Kopplungsfaktor teilweise auf die Mikrostreifenleitung 8 gekoppelt. Die gekoppelte Welle bewegt sich auf der rotorseitigen Mikrostreifenleitung 8 in Fig. 3 entgegen dem Uhrzeigersinn, d.h. entgegen der Laufrichtung, welche die Welle im Umfangsabschnitt 73A der statorseitigen Mikrostreifenleitung 7 hat. Nicht auf die rotorseitige Mikrostreifenleitung 8 übergekoppelte Leistung wird statorseitig dem Abschlusswiderstand 73D reflexionsfrei absorbiert.

Die rotorseitige Mikrostreifenleitung 8 ist im Uhrzeigersinn von Fig. 3 durch einen in Fig. 3 nicht dargestellten Abschlusswiderstand abgeschlossen, entgegen dem Uhrzeigersinn von Fig. 3, d.h. in Ausbreitungsrichtung des von dem Abschnitt 73B der Mikrostreifenleitung 7 eingekoppelten Messsignals, führt die Mikrostreifenleitung 8 zu den zuvor anhand der Figuren 1 und 2 erwähnten Sensorelementen, auf die später eingegangen wird.

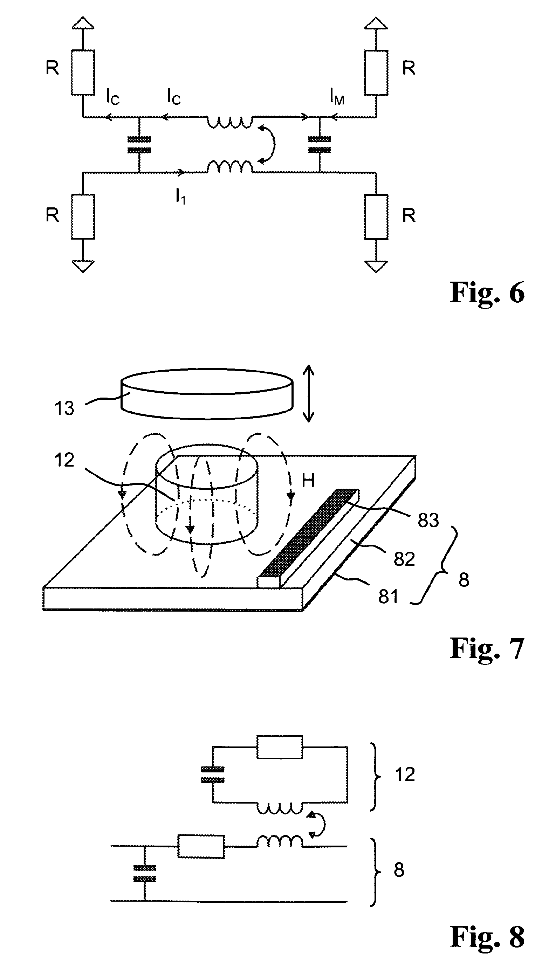

Schaltungstechnisch wirkt die vorausgehend anhand der Figuren 3 bis 5 beschriebene Leitungsanordnung als Richtkoppler. Dies ist ein passives reziprokes Bauelement, mit dessen Hilfe Signale in verschiedene Richtungsanteile aufgespaltet werden können. Fig. 6 zeigt hierzu das Funktionsprinzip des Rückwärtskopplers anhand zweier kapazitiv und induktiv miteinander gekoppelter Leitungen. Ein Strom I₁ auf der unteren Leitung bewirkt auf der oberen Leitung durch kapazitive Kopplung einen Stromfluss I_{C} sowie durch induktive Kopplung einen Stromfluss I_{M}. Auf der signalzugewandten, in Fig. 6 linken Seite addieren sich diese Ströme I_{C} und I_{M} konstruktiv, auf der signalabgewandten, in Fig. 6 rechten Seite destruktiv. Im Idealfall löschen sie sich dort vollständig aus. Die Abschlusswiderstände R terminieren die Leitungen, d.h. sie verhindern eine Reflexion des Signals an den Enden der Leitungen. Mit Hilfe eines solchen Richtkopplers kann die Signalrichtung, d.h. in dem in Fig. 6 gezeigten Beispiel die Richtung des Stromes, auf der Empfängerseite, d.h. in Fig. 6 in der oberen Leitung, vorbestimmt werden. Bei der hier als Ausführungsbeispiel gezeigten Leitungsanordnung überwiegt der kapazitive Anteil der Kopplung.

Bei den anhand der Figuren 1 und 2 erwähnten Sensorelementen 5 handelt es sich bei einer ersten Ausführungsform der Erfindung um dielektrische Resonatoren, d.h. um Körper einer bestimmten geometrischen Form aus Material mit bestimmten dielektrischen Eigenschaften. In der Hochfrequenztechnik werden dielektrische Resonatoren bevorzugt für die Realisierung von Hochfrequenzoszillatoren verwendet. Diese Oszillatoren sind unter der Abkürzung DRO (Dielectric Resonator Oscillator) bekannt. Fig. 7 zeigt die Grundkonfiguration zum Betrieb eines dielektrischen Resonators. Sie umfasst eine Mikrostreifenleitung 8, die sich wie bereits in Fig. 4 zu sehen ist, aus einer Massefläche 81, einem Dielektrikum 82 und einem Streifenleiter 83 zusammensetzt, sowie einen benachbart zu der Mikrostreifenleitung 8 angeordneten dielektrischen Resonator 12 in Form eines zylindrischen (ggf. auch prismenförmigen) Körpers aus einem Dielektrikum mit bestimmten Materialparametern.

Wird ein hochfrequentes Signal auf der Mikrostreifenleitung 8 in einem definierten Abstand von einem dielektrischen Resonator 12 geführt, so wird durch das sich ausbildende magnetische Feld des in dem Streifenleiter 83 fließenden Stromes der Resonator 12 frequenzabhängig angeregt. Dieser entzieht bei Resonanz besagtem magnetischen Feld in signifikantem Ausmaß Energie, wodurch sich die wirksame Impedanz der Mikrostreifenleitung 8 ändert. Diese Änderung kann messtechnisch erfasst und ausgewertet werden. Mit gestrichelten Linien ist in Fig. 7 das mit dem Verschiebungsstrom in dem Resonator 12 verbundene Magnetfeld H angedeutet.

Die Resonanzfrequenz des Resonators 12 kann verstimmt werden durch benachbarte Positionierung eines metallischen Gegenstandes 13, vorzugsweise in vertikaler Richtung, wie es in Fig. 7 dargestellt ist. In dieser Richtung besteht gegenüber einer Variation des Abstandes zwischen dem Resonator 12 und dem metallischen Gegenstand 13, wie sie in Fig. 7 durch den vertikalen Doppelpfeil angedeutet ist, die maximale Empfindlichkeit der Resonanzfrequenz. Die magnetische Kopplung ist umso stärker, je kleiner der Abstand des Resonators 12 von dem Streifenleiter 83 ist.

Ein einfaches elektrisches Ersatzschaltbild eines durch eine benachbarte Mikrostreifenleitung 8 angeregten dielektrischen Resonators 12 ist in Fig. 8 angegeben. Darin ist die Mikrostreifenleitung 8 durch ein Ersatzschaltbild üblicher Art für eine Leitung mit Kapazitäts-, Induktivitäts- und Widerstandsbelag dargestellt und der dielektrische Resonator 12 durch einen elektrischen Reihenschwingkreis. Zwischen der Leitung und dem Schwingkreis besteht eine magnetische Kopplung. Bei Resonanz ist der Strom in dem Schwingkreis maximal und es wird dort die maximale Wirkleistung umgesetzt, welche der Leitung 8 entzogen werden muss.

Wie es in Fig. 7 und 8 durch die Verwendung der Bezugszahl 8 für die dortige Mikrostreifenleitung angedeutet wird, ist bei einer ersten Ausführungsform der vorliegenden Erfindung die zuvor anhand der Figuren 3 und 4 erwähnte, rotorseitige Mikrostreifenleitung 8 mit einem dielektrischen Resonator 12 kombiniert, d.h. es werden die anhand der Figuren 1 und 2 erwähnten Sensorelemente 6 durch solche dielektrischen Resonatoren 12 gebildet. Bei dem metallischen Körper 13, von dessen Abstand zu dem dielektrischen Resonator 12 die Resonanzfrequenz des letzteren abhängt, handelt es sich in diesem Fall um das Werkzeug 4 (Fig. 2), dessen Plananlage an der Arbeitsspindel 1 überwacht werden soll. Eine Fehlstellung des Werkzeugs 4, wie sie Fig. 2 zeigt, ist mit einer anormal großen Entfernung desselben von mindestens einem der Sensorelemente 6 verbunden, was im Sinne von Fig. 7 einer Vergrößerung des Abstandes des metallischen Körpers 13 von dem dielektrischen Resonator 12 entspricht und eine Verschiebung der Resonanzfrequenz des betroffenen Resonators 12 zur Folge hat.

Mit der Integration von mehreren, d.h. mindestens drei radialsymmetrisch verteilten Resonatoren 12 als Sensorelemente 6, die in der Arbeitsspindel 1 bis zur Werkzeugauflagefläche 2 reichen, kann die Werkzeugplananlage überwacht werden. Befindet sich das Werkzeug 4 in planer Auflage, so ist die Resonanzfrequenz aller Resonatoren 12 untereinander gleich und liegt in einem Frequenzbereich, der durch die geometrischen Eigenschaften der Resonatoren 12 sowie deren Einbausituation bestimmt wird. Eine Beeinträchtigung der planen Auflage des Werkzeugs 4 durch Verschmutzung bedeutet ein Abheben des Werkzeugs 4 und führt somit zu einer Resonanzverschiebung. Diese Resonanzverschiebung kann durch Messen der Eingangsimpedanz der Mikrostreifenleitung 8 im Betrieb bei der ursprünglichen, d.h. bei perfekter Plananlage gültigen Resonanzfrequenz elektrisch ausgewertet werden. Durch einfache Schwellwertdetektion kann dann ein digitales Signal erzeugt und der Maschinensteuerung als Anzeige der Plananlage zur Verfügung gestellt werden.

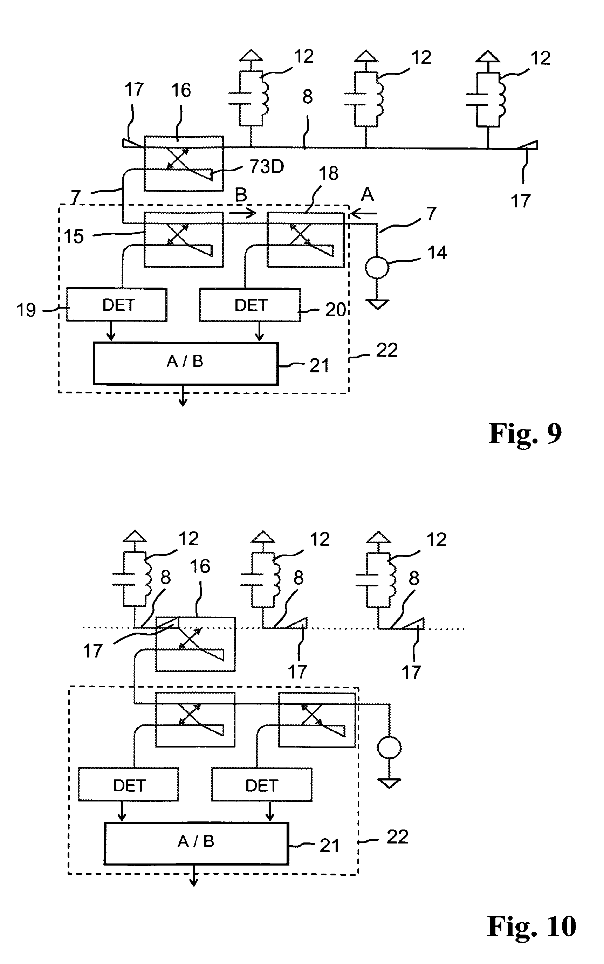

Wie die Signalverarbeitung zur Detektion der Plananlage bei der vorausgehend beschriebenen Ausführungsform der Erfindung erfolgt, wird nachfolgend anhand des in Fig. 9 dargestellten Blockschaltbildes erläutert. Von einem Oszillator 14 wird die in die statorseitige Mikrostreifenleitung 7 ein hochfrequentes Signal A eingespeist, von dem ein Teil durch einen ersten Richtkoppler 15 ausgekoppelt wird, während der überwiegende Teil zu einem zweiten Richtkoppler 16 weiterläuft. Dieser Richtkoppler 16, der durch die anhand der Figuren 3 bis 5 beschriebene Leitungsanordnung gebildet wird, koppelt einen Teil des an ihm ankommenden Signals auf die rotorseitige Mikrostreifenleitung 8, während der verbleibende Teil bis zu dem Abschlußwiderstand 73D läuft und dort absorbiert wird.

Die rotorseitige Mikrostreifenleitung 8 ist an beiden Enden mit Abschlusswiderständen 17 abgeschlossen. Der in Laufrichtung der von der Mikrostreifenleitung 7 her eingekoppelten Welle liegende Teil der Mikrostreifenleitung 8 verläuft an der Arbeitsspindel 1 benachbart zu drei Sensorelementen 6 (Fig. 1 und 2) in Form dielektrischer Resonatoren 12, die in Fig. 9 rein schematisch durch elektrische Schwingkreise symbolisiert sind. Die tatsächliche Struktur dieser Resonatoren 12 und die Art Ihrer Kopplung mit der Mikrostreifenleitung 8 sind so beschaffen, wie es zuvor anhand der Figuren 7 und 8 erläutert wurde. Aufgrund ihrer zumindest annähernd zylindrischen Formgebung, wie sie Fig. 7 zeigt, eignen sich solche Resonatoren 12 sehr gut zur Einbringung als Sensorelemente 6 in Bohrungen 5 in der Arbeitsspindel 1. Die Mikrostreifenleitung 8 ist auf der Rückseite der Arbeitsspindel 1 entlang einer kreisförmigen Bahn geführt und passiert dabei die rückseitigen Enden der Resonatoren 12 jeweils in geringem Abstand.

Die Betriebsfrequenz des Oszillators 14 ist so gewählt, dass bei perfekter Plananlage des Werkzeugs 4 an der Arbeitsspindel 1 alle als Sensoren 6 vorgesehenen Resonatoren 12 durch das in die rotorseitige Mikrostreifenleitung 8 eingekoppelte hochfrequente Signal bei ihrer Resonanzfrequenz angeregt werden. Wenn einer der Resonatoren 12 infolge einer fehlerhaften Werkzeuganlage außer Resonanz gerät, dissipiert er weniger Leistung, was einer Änderung der Eingansimpedanz der rotorseitigen Mikrostreifenleitung 8 an dem Richtkoppler 16 entspricht. Diese Änderung hat auf der statorseitigen Mikrostreifenleitung 7 eine entsprechende Änderung des Verhältnisses der Leistungen des von dem Oszillator 14 eingespeisten Signals A und des reflektierten, d.h. auf der Mikrostreifenleitung 7 von dem Richtkoppler 16 aus in Richtung des Oszillators 14 zurücklaufenden Signals B zur Folge.

Mittels eines weiteren Richtkopplers 18 wird ein Teil auf der Mikrostreifenleitung 7 zurücklaufenden Signals B ausgekoppelt. Die durch die Richtkoppler 15 und 18 ausgekoppelten Teile des eingespeisten und des reflektierten Signals A bzw. B werden jeweils einem Detektor 19 bzw. 20 zugeführt, welcher die jeweilige Leistung des Signals ermittelt. Die Detektoren 19 und 20 sind mit einer Auswertungseinheit 21 verbunden, welche das Verhältnis der beiden Leistungen A und B bildet. Die Richtkoppler 15 und 18, die Detektoren 19 und 20 und die Auswertungseinheit 21 bilden zusammen eine Reflexionsmesseinrichtung 22. Das Leistungsverhältnis A/B gibt Aufschluss über die Impedanz der rotorseitigen Mikrostreifenleitung 8. Durch einen Vergleich mit einem Schwellwert kann aus diesem Verhältnis eine binäre Anzeige der korrekten Werkzeugplananlage an der Arbeitsspindel 1 abgeleitet werden. Der Schwellwert ist hierbei anhand des Wertes des Verhältnisses A/B bei perfekter Plananlage festzulegen.

Die vorausgehend beschriebene Ausführungsform der Erfindung kann dahingehend abgewandelt werden, dass auf dem Rotor 11 nicht nur eine einzige Mikrostreifenleitung 8 so verlegt wird, dass sie mit mehreren dielektrischen Resonatoren 12 gekoppelt ist, sondern stattdessen auf dem Rotor 11 mehrere voneinander separate Mikrostreifenleitungen 8 verlegt werden, von denen jede mit nur einem einzigen von mehreren dielektrischen Resonatoren 12 gekoppelt ist. Ein Blockschaltbild dieser Abwandlung zeigt Fig. 10, wobei dort die von der Abwandlung nicht betroffenen statorseitigen Elemente zur Vereinfachung nicht mit Bezugszahlen versehen sind.

Bei dieser Anordnung hängt es in Betrieb der Arbeitsspindel 1 von der momentanen Winkelposition des Rotors 11 gegenüber dem Stator 10 (Fig. 3) ab, welche der mehreren rotorseitigen Mikrostreifenleitungen 8 gerade mit der einzigen statorseitigen Mikrostreifenleitung 7 über den Richtkoppler 16 elektrisch gekoppelt ist, d.h. an welchem der Sensorelemente 6 gerade die Plananlage des Werkzeugs 4 an der Arbeitsspindel 1 überprüft werden kann. Jede einzelne der mehreren rotorseitigen Mikrostreifenleitungen 8 erstreckt sich in diesem Fall nämlich nur über ein begrenztes Segment des Umfangs des Rotors 11. Anderseits erlaubt eine solche Leitungsanordnung, bei der die rotorseitige Mikrostreifenleitung 8 in mehrere separate Segmente unterteilt ist, in einfacher Weise eine Aussage darüber, an welcher Stelle der Auflagefläche 2 der Arbeitsspindel 1 ein Werkzeug 4 ggf. abgehoben ist. Dies wäre bei nur einer einzigen rotorseitigen Mikrostreifenleitung 8 allenfalls mit einem hohen messtechnischen Aufwand möglich.

Alle anderen Merkmale der zuvor beschriebenen ersten Ausführungsform gelten für die Abwandlung nach Fig. 10 gleichermaßen. Die Auswertungseinheit 21 gibt jedoch in diesem Fall nicht nur ein einziges Ausgangssignal ab, sondern mehrere verschiedene Ausgangssignale, nämlich ein eigenes Ausgangssignal für jede rotorseitige Mikrostreifenleitung 8 bzw. jeden Resonator 12, wobei diese Signale gegeneinander zeitlich versetzt sind und die Multiplexfrequenz von der Anzahl der rotorseitigen Mikrostreifenleitungen 8 sowie von der Drehzahl des Rotors 11 im Betrieb der Arbeitsspindel 1 abhängt.

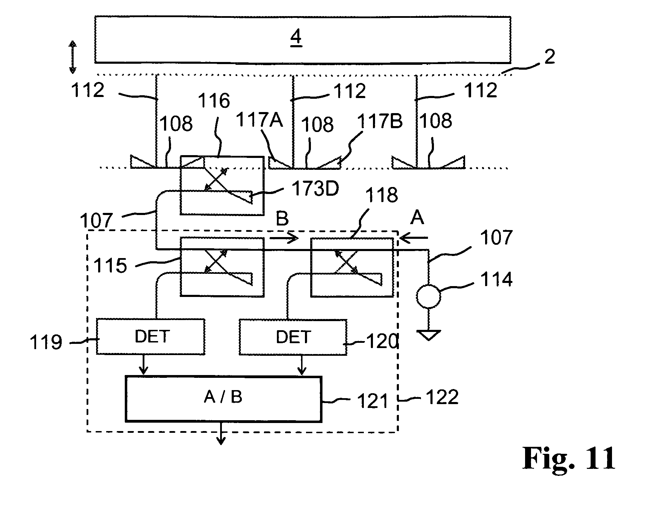

Eine zweite Ausführungsform der Erfindung wird nachfolgend anhand des Blockschaltbildes von Fig. 11 beschrieben. Auf der Rotorseite sind hier wie bei der zuletzt anhand Fig. 10 beschriebenen Abwandlung der ersten Ausführungsform mehrere, in dem gezeigten Beispiel drei Mikrostreifenleitungen 108 angeordnet, die periodisch abwechselnd mit einer Mikrostreifenleitung 107 auf der Statorseite elektrisch gekoppelt sind. Diese elektrische Kopplung entspricht der anhand der Figuren 3 bis 6 beschriebenen elektrischen Kopplung der beiden Mikrostreifenleitungen 8 und 7 der ersten Ausführungsform der Erfindung und ist in Fig. 11 durch den Richtkoppler 116 verkörpert, welcher dem Richtkoppler 16 der ersten Ausführungsform entspricht. Die weiteren in Fig. 11 eingezeichneten Richtkoppler 115 und 118 entsprechen in ihrer Funktion den Richtkopplern 15 und 18. Gleiches gilt sinngemäß für den Oszillator 114 und den Oszillator 14.

Jede der rotorseitigen Mikrostreifenleitungen 108 ist an ihren beiden Enden mit einem jeweiligen Widerstand 117A bzw. 117B reflexionsfrei abgeschlossen. Von den rotorseitigen Mikrostreifenleitungen 108 aus erstrecken sich jeweils unmittelbar vor denjenigen Abschlusswiderständen 117A, welche die Mikrostreifenleitungen 108 in Laufrichtung des durch den Richtkoppler 116 eingekoppelten Signals abschließen, Stichleitungen 112 in Richtung der Werkzeugauflagefläche 2 der Arbeitsspindel 1 (vgl. Figuren 1 und 2). Diese Stichleitungen 112 bilden hier die Sensorelemente 6, mittels derer die plane Anlage des Werkzeugs 4 an der Werkzeugauflagefläche 2 überwacht wird. Hierzu enden die Stichleitungen 112 an der Werkzeugauflagefläche 2 so, dass dort jeweils ohne Anlage eines Werkzeugs 4 elektrischer Leerlauf und bei planer Anlage eines Werkzeugs 4 elektrischer Kurzschluss zwischen dem jeweiligen Streifenleiter und der Massefläche herrscht, wobei der Kurzschluss unmittelbar durch das metallisch leitende Werkzeug 4 hergestellt wird.

Die Länge der Stichleitungen 112 und die Betriebsfrequenz des Oszillators 114 sind so aufeinander abgestimmt, dass die Länge der Stichleitungen 112 ein ungeradzahliges Vielfaches eines Viertels der Wellenlänge des in die rotorseitigen Mikrostreifenleitungen 108 eingekoppelten Signals beträgt, die Stichleitungen also sogenannte λ/4-Leitungen sind. Diese wirken bekanntlich als Dualwandler, d.h. sie transformieren Leerlauf in Kurzschluss und umgekehrt Kurzschluss in Leerlauf.

In Abhängigkeit vom Anlagezustand des Werkzeugs 4 an der Werkzeugauflagefläche 2 ergibt sich somit eine drastische Änderung der jeweiligen Eingangsimpedanz der Stichleitungen 112. Bei plan anliegendem Werkzeug 4 verursachen die Stichleitungen keine nennenswerte zur Impedanz der benachbarten Abschlusswiderstände 117A hinzuzufügende Blindlast, so dass das ankommende Mikrowellensignal in den Abschlusswiderständen 117A nahezu ungestört absorbiert wird. Bei abgehobenem Werkzeug 2 wird das ankommende Mikrowellensignal hingegen infolge der Kurzschlusswirkung der betroffenen Stichleitungen 112 nahezu vollständig mit einer Phasendrehung von 180 Grad reflektiert und über den Richtkoppler 116 teilweise wieder in Richtung des Oszillators 114 gekoppelt, teilweise im gegenüberliegenden Abschlusswiderstand 117B reflexionsfrei absorbiert.

Statorseitig können die beiden unterschiedlichen Situationen wie bei der zuvor beschriebenen ersten Ausführungsform durch eine Reflexionsmessung erkannt werden, wozu auch hier Richtkoppler 115 und 118, diesen jeweils nachgeschaltete Detektoren 119 und 120 sowie zur Verhältnisbildung eine Auswertungseinheit 121 vorgesehen sind. Die Funktionsweise und die Zusammenschaltung dieser Komponenten entspricht der ersten Ausführungsform der Erfindung in der Abwandlung nach Fig. 10 mit mehreren separaten rotorseitigen Mikrostreifenleitungen. Besagte Komponenten bilden zusammen eine Reflexionsmesseinrichtung 122, welche der Reflexionsmesseinrichtung 22 der ersten Ausführungsform entspricht. Der Übergang zwischen einer korrekten und einer fehlerhaften Anlage des Werkzeugs 4 an der Auflagefläche 2 äußert sich in einer deutlichen Änderung des Reflexionsfaktors mindestens einer, typischerweise aber mehrere rotorseitiger Mikrostreifenleitungen 108. Damit ändert sich aufgrund der Kopplung auch der Reflexionsfaktor der statorseitigen Mikrostreifenleitung 107, was von der Reflexionsmesseinrichtung 122 festgestellt wird.

Die zweite Ausführungsform mit Stichleitungen 112 als Sensorelementen 6 kann in Analogie zur ersten Ausführungsform auch mit nur einer einzigen rotorseitigen Mikrostreifenleitung 108 realisiert werden. Allerdings können dann nicht mehr alle Stichleitungen 112 unmittelbar vor einem Abschlusswiderstand 117A von der rotorseitigen Mikrostreifenleitung 108 abzweigen. Es ergibt sich daher eine etwas komplexere Gesamtsituation, doch gilt auch hier, dass eine als Dualwandler wirkende Stichleitung 112 beim Abheben des Werkzeugs an der Stelle ihrer Abzweigung von der rotorseitigen Mikrostreifenleitung 108 als Kurzschluss wirkt und eine Signalreflexion mit annähernd 180° Phasendrehung verursacht. Dies führt wiederum zu einer erhöhten Signalreflexion über den Richtkoppler 116 zurück in die statorseitige Mikrostreifenleitung 107, was von der Reflexionsmesseinrichtung 122 festgestellt wird. Aufgrund der bestehenden Analogie zu der Variante der ersten Ausführungsform nach Fig. 9 ist dieser Variante der zweiten Ausführungsform keine eigene Figur gewidmet.

Den vorausgehend beschriebenen Ausführungsbeispielen liegt die Ausbildung der stator- und rotorseitigen Hochfrequenzleitungen als Mikrostreifenleitungen zugrunde. Dies ist zwar vorteilhaft, aber nicht zwingend notwendig. So könnten die beiden Leitungen beispielsweise auch als Koaxialleitungen ausgebildet sein und die Kopplung könnte durch geeignet geschlitzte Abschnitte der beiden Leitungen realisiert sein, in denen die entlang der Leitungen laufenden elektromagnetischen Wellen in Richtung der jeweils anderen Leitung austreten können. Eine solche und vergleichbare Modifikationen liegen im fachmännischen Ermessen und sollen vom Schutz der Ansprüche umfasst sein.

## Patentansprüche

1. Arbeitsspindel (1) mit einer Vorrichtung zur Überwachung der Plananlage eines Werkzeugs (4) oder Werkzeugträgers an der Arbeitsspindel (1), insbesondere in einer Bearbeitungsmaschine, **dadurch gekennzeichnet, dass** an einem feststehenden Teil (10) der Arbeitsspindel (1) eine erste Hochfrequenzleitung (7; 107) und an einem rotierenden Teil (11) der Arbeitsspindel (1) mindestens eine zweite, mit der ersten elektrisch gekoppelte Hochfrequenzleitung (8; 108) angeordnet ist, dass die erste Hochfrequenzleitung (7; 107) mit einer Signalquelle (14; 114) und mit einer Reflexionsmesseinrichtung (22; 122) verbunden ist, und dass auf dem rotierenden Teil (11) der Arbeitsspindel (1) eine Vielzahl von Sensorelementen (6) angeordnet sind, die das Reflexionsverhalten der zweiten Hochfrequenzleitung (8; 108) in Abhängigkeit von der Position des Werkzeugs (4) oder Werkzeugträgers in Bezug auf die Arbeitsspindel (1) beeinflussen.

2. Arbeitsspindel nach Anspruch 1, **dadurch gekennzeichnet, dass** mindestens drei Sensorelemente (6) in einer regelmäßigen Anordnung bezüglich der Umfangsrichtung der Arbeitsspindel (1) vorgesehen sind.

3. Arbeitsspindel nach Anspruch 1 oder 2, **dadurch gekennzeichnet, dass** die erste und die zweite Hochfrequenzleitung als Mikrostreifenleitungen (7; 107, 8; 108) ausgebildet sind, die zumindest teilweise in Umfangsrichtung der Rotation verlaufen, und dass sie einander gegenüberliegend angeordnet sind, wobei die jeweiligen Streifenleiter (73, 83) einander zugewandt sind.

4. Arbeitsspindel nach einem der Ansprüche 1 bis 3, **dadurch gekennzeichnet, dass** die Anordnung der ersten und zweiten Hochfrequenzleitungen (7; 107, 8; 108) einen Richtkoppler (16; 116) bildet, welcher ein sich entlang einer der beiden Hochfrequenzleitungen (7; 107, 8; 108) ausbreitendes Signal in die jeweils andere Hochfrequenzleitung (8; 108, 7; 107) einkoppelt und dabei die Ausbreitungsrichtung in der anderen Hochfrequenzleitung (8; 108, 7; 107) vorbestimmt.

5. Arbeitsspindel nach einem der Ansprüche 1 bis 4, **dadurch gekennzeichnet, dass** eine Vielzahl von zweiten Hochfrequenzleitungen (8; 108) vorgesehen ist, und dass jeder von diesen ein eigenes Sensorelement (6) zugeordnet und so angeordnet ist, dass es ihr jeweiliges Reflexionsverhalten beeinflusst.

6. Arbeitsspindel nach einem der Ansprüche 1 bis 4, **dadurch gekennzeichnet, dass** an dem rotierenden Teil (11) genau eine zweite Hochfrequenzleitung (8) angeordnet und dort so geführt ist, dass sie nacheinander mehrere Sensorelemente (6) passiert, welche ihr Reflexionsverhalten beeinflussen.

7. Arbeitsspindel nach einem der Ansprüche 1 bis 6, **dadurch gekennzeichnet, dass** die Sensorelemente (6) dielektrische Resonatoren (12) sind, die in oder an der Arbeitsspindel (1) so angeordnet sind, dass ihre jeweilige Resonanzfrequenz von der Distanz zu einem Werkzeug (4) oder Werkzeugträger abhängt, und dass die Betriebsfrequenz der Signalquelle (14) so gewählt ist, dass die dielektrischen Resonatoren (12) bei planer Anlage des Werkzeugs (4) oder Werkzeugträgers an einer Werkzeugauflagefläche (2) der Arbeitsspindel (1) bei ihrer Resonanzfrequenz angeregt werden.

8. Arbeitsspindel nach Anspruch 7, **dadurch gekennzeichnet, dass** die dielektrischen Resonatoren (12) Körper aus dielektrischem Material sind, die in Bohrungen (5) in der Arbeitsspindel (1), welche an einer zum flächigen Kontakt mit einem Werkzeug (4) oder Werkzeugträger bestimmten Werkzeugauflagefläche (2) enden, angeordnet sind.

9. Arbeitsspindel nach einem der Ansprüche 1 bis 6, **dadurch gekennzeichnet, dass** die Sensorelemente (6) Hochfrequenzleitungsstücke (112) sind, die sich von der zweiten Hochfrequenzleitung (108) aus in Richtung einer Werkzeugauflagefläche (2) der Arbeitsspindel (1) erstrecken, und deren Enden jeweils so an die Werkzeugauflagefläche (2) geführt sind, dass sie nur bei planer Anlage eines Werkzeugs (4) oder Werkzeugträgers an der Werkzeugauflagefläche (2) kurzgeschlossen und andernfalls offen sind.

10. Arbeitsspindel nach Anspruch 9, **dadurch gekennzeichnet, dass** die Länge der Hochfrequenzleitungsstücke (112) so auf die Betriebsfrequenz der Signalquelle (114) abgestimmt ist, dass sie ein ungeradzahliges Vielfaches eines Viertels der Wellenlänge eines von der ersten Hochfrequenzleitung (7) in die zweite Hochfrequenzleitung (108) eingekoppelten Signals beträgt.

11. Arbeitsspindel nach Anspruch 9 oder 10, **dadurch gekennzeichnet, dass** mehrere separate zweite Hochfrequenzleitungen (108) vorgesehen sind, von denen jeweils unmittelbar vor Abschlusswiderständen (117A), welche die zweiten Hochfrequenzleitungen (108) in Laufrichtung eines durch einen Richtkoppler (116) eingekoppelten Signals abschließen, die als Sensorelemente (6) fungierenden Hochfrequenzleitungsstücke (112) abzweigen.

12. Arbeitsspindel nach einem der Ansprüche 1 bis 11, **dadurch gekennzeichnet, dass** die Reflexionsmesseinrichtung (22; 122) Richtkoppler (15; 115, 18; 118) zur Auskopplung jeweils eines vorbestimmten Anteils eines von der Signalquelle (1; 114) abgegebenen Messsignals (A) und eines in Richtung der Signalquelle reflektierten Messsignals (B), Detektoren zur Messung der jeweiligen Leistung des ausgekoppelten Signalanteils und eine Auswertungseinheit (21, 121) zur Ermittlung des Verhältnisses der beiden Leistungen umfasst.

## Claims

1. Work spindle (1) with a device for monitoring the flat contact of a tool (4) or tool carrier on the work spindle (1), in particular in a machine tool, **characterised in that** a first high frequency line (7; 107) is arranged on a stationary part (10) of the work spindle (1) and at least one second high frequency line (8; 108) coupled electrically to the first is arranged on a rotating part (11) of the work spindle (1), **in that** the first high frequency line (7; 107) is connected to a signal source (14; 114) and to a reflection measuring device (22; 122), and **in that** a plurality of sensor elements (6) are arranged on the rotating part (11) of the work spindle (1) which influence the reflection characteristics of the second high frequency line (8; 108) according to the position of the tool (4) or tool carrier in relation to the work spindle (1).

2. Work spindle according to claim 1, **characterised in that** at least three sensor elements (6) are provided in a regular arrangement with respect to the circumferential direction of the work spindle (1).

3. Work spindle according to claim 1 or 2, **characterised in that** the first and the second high frequency lines take the form of micro strip lines (7; 107, 8; 108) which at least partly run in the circumferential direction of rotation, and **in that** they are arranged lying opposite one another, with the respective strip conductors (73, 83) facing one another.

4. Work spindle according to one of claims 1 to 3, **characterised in that** the arrangement of the first and second high frequency lines (7; 107, 8; 108) forms a directional coupler (16; 116) which inputs a signal propagating along one of the two high frequency lines (7; 107, 8; 108) into the other high frequency line (8; 108, 7; 107) and in the process predetermines the direction of propagation in the other high frequency line (8; 108, 7; 107).

5. Work spindle according to one of claims 1 to 4, **characterised in that** a plurality of second high frequency lines (8; 108) is provided and **in that** each of these has its own associated sensor element (6) and is arranged so that it influences its respective reflection characteristics.

6. Work spindle according to one of claims 1 to 4, **characterised in that** a second high frequency line (8) is arranged precisely on the rotating part (11) and guided there so that it passes a plurality of sensor elements (6) one after another which influence its reflection characteristics.

7. Work spindle according to one of claims 1 to 6, **characterised in that** the sensor elements (6) are dielectric resonators (12) which are arranged in or on the work spindle (1) so that their respective resonance frequency depends on the distance to a tool (4) or tool carrier, and **in that** the operating frequency of the signal source (14) is selected so that the dielectric resonators (12) are excited at their resonance frequency when the tool (4) or tool carrier lies flat on a tool supporting face (2) of the work spindle (1).

8. Work spindle according to claim 7, **characterised in that** the dielectric resonators (12) are elements made of dielectric material which are arranged in bores (5) in the work spindle (1) which end at a tool supporting face (2) designed for areal contact with a tool (4) or tool carrier.

9. Work spindle according to one of claims 1 to 6, **characterised in that** the sensor elements (6) are high frequency line sections (112) which extend from the second high frequency line (108) in the direction of a tool supporting face (2) of the work spindle (1), and the ends of which in each case are guided to the tool supporting face (2) so that they are only short circuited when a tool (4) or tool carrier lies flat on the tool supporting face (2) and otherwise are open.

10. Work spindle according to claim 9, **characterised in that** the length of the high frequency line sections (112) is adjusted to the operating frequency of the signal source (114) so that it amounts to an odd-numbered multiple of a quarter of the wavelength of a signal inputted by the first high frequency line (7) into the second high frequency line (108).

11. Work spindle according to claim 9 or 10, **characterised in that** a plurality of separate second high frequency lines (108) are provided from which in each case the high frequency line sections (112) functioning as sensor elements (6) branch directly in front of terminal resistors (117A) which terminate the second high frequency lines (108) in the running direction of a signal inputted by a directional coupler (116).

12. Work spindle according to one of claims 1 to 11, **characterised in that** the reflection measuring device (22; 122) comprises directional couplers (15; 115, 18; 118) for outputting in each case a predetermined part of a measurement signal (A) outputted by the signal source (1; 114) and a measurement signal (B) reflected in the direction of the signal source, detectors for measuring the respective power of the outputted signal part and an evaluation unit (21, 121) for determining the ratio of the two powers.

## Revendications

1. Broche de travail (1) dotée d'un dispositif de surveillance de l'appui plan d'un outil (4) ou d'un porte-outil sur la broche de travail (1), en particulier dans une machine d'usinage, **caractérisée en ce qu'**une première ligne à haute fréquence (7 ; 107) est disposée sur une partie fixe (10) de la broche de travail (1) et au moins une deuxième ligne à haute fréquence (8 ; 108), couplée électriquement à la première, sur une partie en rotation (11) de la broche de travail (1), que la première ligne à haute fréquence (7; 107) est reliée à une source de signaux (14 ; 114) et à un dispositif de mesure par réflexion (22 ; 122), et que sur la partie en rotation (11) est disposée une pluralité d'éléments capteurs (6) qui influence les caractéristiques de réflexion de la deuxième ligne à haute fréquence (8 ; 108) en fonction de la position de l'outil (4) ou du porte-outil par rapport à la broche de travail (1).

2. Broche de travail selon la revendication 1, **caractérisée en ce qu'**au moins trois éléments capteurs (6) sont prévus dans une disposition régulière par rapport à la direction circonférentielle de la broche de travail (1).

3. Broche de travail selon la revendication 1 ou 2, **caractérisée en ce que** la première et la deuxième ligne à haute fréquence sont réalisées sous la forme de lignes à microruban (7 ; 107, 8 ; 108) qui s'étendent au moins partiellement en direction circonférentielle de la rotation, et qu'elles sont disposées l'une en face de l'autre, les conducteurs à ruban respectifs (73, 83) étant tournés l'un vers l'autre.

4. Broche de travail selon une des revendications 1 à 3, **caractérisée en ce que** la disposition des première et deuxième lignes à haute fréquence (7 ; 107, 8 ; 108) forme un coupleur directif (16 ; 116), lequel injecte un signal se propageant le long d'une des deux lignes à haute fréquence (7 ; 107, 8 ; 108) dans l'autre ligne à haute fréquence respective (8 ; 108, 7 ; 107) et prédétermine ce faisant le sens de propagation dans l'autre ligne à haute fréquence (8 ; 108, 7 ; 107).

5. Broche de travail selon une des revendications 1 à 4, **caractérisée en ce qu'**une pluralité de deuxièmes lignes à haute fréquence (8 ; 108) est prévue, et qu'un élément capteur (6) distinct est associé à chacune de celles-ci et disposé de façon à influencer ses caractéristiques de réflexion.

6. Broche de travail selon une des revendications 1 à 4, **caractérisée en ce qu'**exactement une deuxième ligne à haute fréquence (8) est disposée sur la partie en rotation (11) et y est guidée de façon à passer successivement par plusieurs éléments capteurs (6) qui influencent ses caractéristiques de réflexion.

7. Broche de travail selon une des revendications 1 à 6, **caractérisée en ce que** les éléments capteurs (6) sont des résonateurs diélectriques (12) qui sont disposés dans ou sur la broche de travail (1) de façon que leur fréquence de résonance respective dépende de la distance par rapport à un outil (4) ou un porte-outil, et que la fréquence de fonctionnement de la source de signaux (14) est choisie de façon que les résonateurs diélectriques (12) soient excités à leur fréquence de résonance en cas d'appui plan de l'outil (4) ou du porte-outil sur une surface d'appui d'outil (2) de la broche de travail (1).

8. Broche de travail selon la revendication 7, **caractérisée en ce que** les résonateurs diélectriques (12) sont des corps en matériau diélectrique qui sont disposés dans des perçages (5) dans la broche de travail (1) qui débouchent sur une surface d'appui d'outil (2) destinée au contact plan avec un outil (4) ou un porte-outil.

9. Broche de travail selon une des revendications 1 à 6, **caractérisée en ce que** les éléments capteurs (6) sont des portions de ligne à haute fréquence (112) qui s'étendent depuis la deuxième ligne à haute fréquence (108) en direction d'une surface d'appui d'outil (2) de la broche de travail (1) et dont les extrémités sont chaque fois guidées sur la surface d'appui d'outil (2) de façon qu'elles soient court-circuitées seulement en cas d'appui plan d'un outil (4) ou d'un porte-outil sur la surface d'appui d'outil (2) et ouverte dans le cas contraire.

10. Broche de travail selon la revendication 9, **caractérisée en ce que** la longueur des portions de ligne à haute fréquence (112) est adaptée à la fréquence de fonctionnement de la source de signaux (114) de façon qu'elle représente un multiple impair d'un quart de la longueur d'onde d'un signal injecté par la première ligne à haute fréquence (7) dans la deuxième ligne à haute fréquence (108).

11. Broche de travail selon la revendication 9 ou 10, **caractérisée en ce que** plusieurs deuxièmes lignes à haute fréquence (108) séparées sont prévues, dont bifurquent à chaque fois, immédiatement avant des résistances de terminaison (117A) qui terminent les deuxièmes lignes à haute fréquence (108) dans le sens de déplacement d'un signal injecté par un coupleur directif (116), les portions de ligne à haute fréquence (112) faisant fonction d'éléments capteurs (6).

12. Broche de travail selon une des revendications 1 à 11, **caractérisée en ce que** le dispositif de mesure par réflexion (22 ; 122) comprend des coupleurs directifs (15 ; 115, 18 ; 118) pour extraire chaque fois une part prédéterminée d'un signal de mesure (A) délivré par la source de signaux (1 ; 114) et d'un signal de mesure (B) réfléchi en direction de la source de signaux, des détecteurs pour mesurer la puissance respective de la part de signal extraite et une unité d'évaluation (21, 121) pour déterminer le rapport des deux puissances.
